# EUROPÄISCHE PATENTSCHRIFT

(11) **EP 0 833 287 B1**
(45) Veröffentlichungstag und Bekanntmachung des Hinweises auf die Patenterteilung: **21.03.2001**
(21) Anmeldenummer: 97116431.4
(22) Anmeldetag: 20.09.1997
(51) Int. Cl.: G08B 13/183, F16P 3/14

(54) **Sicherheitsbarriere**
Safety barrier
Barrière de sécurité

(30) Priorität: 30.09.1996 DE 19640194
(43) Veröffentlichungstag der Anmeldung: 01.04.1998
(73) Patentinhaber: Fraba Sicherheitssysteme GmbH, 51063 Köln (DE)
(72) Erfinder: Pohl, Wolfgang, 51069 Köln (DE)
(74) Vertreter: Selting, Günther, Dipl.-Ing.

(56) Entgegenhaltungen:
- DE-U- 8 814 954

## Beschreibung

Die Erfindung betrifft eine Sicherheitsbarriere mit Lichtsender, einem Lichtempfänger, einer nicht leitungsgebundenen Lichtsignalstrecke zwischen Lichtsender und Lichtempfänger und einer Auswerteschaltung, die ein elektrisches Signal liefert, sobald die Lichtsignalstrecke unterbrochen wird.

Ein Beispiel für eine solche Sicherheitsbarriere ist eine Lichtschranke. Sie besteht aus einem Fotodetektor (z.B. Fotodiode, Fototransistor) als Empfänger, den eine Lichtquelle als Sender beleuchtet. Die Lichtschranke liefert ein elektrisches Signal, sobald der Lichtweg durch einen undurchsichtigen Gegenstand unterbrochen wird. Lichtschranken sichern beispielsweise in der Sicherheitstechnik Arbeitsmaschinen, um Personen- und Sachschäden zu verhindern. In der Sicherheitstechnik muß gewährleistet sein, daß die der Lichtschranke nachgeordneten Geräte und/oder Maschinen bei einem Fehler der Lichtschranke in den Störungszustand übergehen und beispielsweise die Arbeitsmaschine abschalten.

Folgende Fehlertypen lassen sich unterscheiden:
1. Die Lichtstrecke wird unterbrochen.
2. Die Lichtstrecke wird durch Fremdlicht beeinflußt.
   Gefährliche Situationen können beispielsweise dann auftreten, wenn die Lichtstrecke zwischen der Lichtquelle und dem Fotodetektor der Lichtschranke unterbrochen ist, jedoch auf den Fotodetektor Licht einer anderen Lichtquelle (Fremdlicht) einfällt. Die Lichtschranke muß in diesem Fall erkennen, daß der ordnungsgemäße Betrieb gestört ist.
3. Fehler an elektrischen Bauteilen, beispielsweise Kabelbruch, Kurzschluß usw.

Damit die Sicherheitsbarriere mit der Lichtschranke im Falle einer Unterbrechung der Lichtstrecke auch dann in den Störungszustand übergeht, wenn auf den Detektor Fremdlicht einfällt, wurde bereits vorgeschlagen, das Licht der Lichtquelle der Lichtschranke zu pulsen. Der Detektor ist mit Hilfe von Filtern ebenfalls nur in der Lage, das gepulste Licht zu empfangen. Bleibt das gepulste Licht aus, geht die Lichtschranke in den Störzustand. Mit diesem Verfahren läßt sich jedoch nur die Beeinflussung durch statisches Fremdlicht vermeiden. Ist das Fremdlicht mit übereinstimmender Frequenz gepulst, geht die Lichtschranke nicht in den Störzustand.

Darüber hinaus ist es auf dem Stand der Technik bekannt, Licht, dem zuvor ein Code aufmoduliert wurde, von der Lichtquelle zum Detektor zu senden. Der gesendete und empfangene Code wird mit Hilfe von digitalen Schaltkreisen miteinander verglichen. Selbst wenn das Fremdlicht gepulst ist, ist man mit dieser Technik in jedem Fall in der Lage, einen Fehler durch Einfall von Fremdlicht zu vermeiden.

Beide aus dem Stand der Technik bekannten Anordnungen erfordern einen relativ hohen Schaltungs- und Bauteilaufwand. Des weiteren ist nicht in jedem Fall gewährleistet, dass bei einem Fehler an elektrischen Bauteilen die Anordnung in den Störungszustand übergeht.

In der Druckschrift DE 88 14 954 U ist eine Lichtschranken-Sicherheitseinrichtung beschrieben, bei der das Rückkopplungsprinzip genutzt wird. Die Einrichtung hat mehrere Lichtschranken mit jeweils einem Sender und einem Empfänger, wobei die Empfänger-Ausgänge jeweils mit einem Eingang eines ROMs verbunden sind. Die Ausgänge des ROMs sind mit Eingängen eines Schrittschaltwerkes verbunden. Die Eingangssignale des Schrittschaltwerkes werden um einen Takt verzögert an den Ausgängen des Schrittschaltwerkes ausgegeben. Die Ausgänge sind mit einem Dekoder verbunden, der dem Bitmuster dieser beiden Ausgänge entsprechend die vier Leuchtdioden ansteuert. Der Ausgang ist mit einer Sicherheitssignal-Erzeugungseinrichtung verbunden, die im Falle eines Alarms aktiv wird. Die Ausgänge sind außerdem mit Eingängen des ROMs verbunden, so dass eine mehrkanalige Rückkopplungsschleife gebildet wird. Eine weitere mehrkanalige Rückkopplungsschleife wird durch das ROM, das Schrittschaltwerk, den Dekoder und die Lichtschanken gebildet.

Der Erfindung liegt die Aufgabe zu Grunde, eine Sicherheitsbarriere zu schaffen, die einen geringen Schaltungsaufwand erfordert und fehlersicher ist.

Die Lösung der Aufgabe erfolgt erfindungsgemäß durch die Merkmale des Anspruchs 1.

Die Lösung dieser Aufgabe basiert auf dem Gedanken, dass jeder Fehler die Schwingungen eines Generators unterbricht. Im einzelnen wird die Aufgabe dadurch gelöst, dass bei einer Anordnung der eingangs erwähnten Art die nicht leitungsgebundene Signalstrecke zumindest Bestandteil der Rückkopplung eines Generators zur Erzeugung elektrischer Schwingungen ist. Der Generator erzeugt beispielsweise sinus-, rechteck-, sägezahn-, dreieckförmige oder impulsartige Schwingungen. Für die Weiterverarbeitung der elektrischen Signale haben sich rechteckförmige Schwingungen als vorteilhaft herausgestellt.

Schwingt der Generator mit der durch den rückgekoppelten Schwingungsgenerator vorgegebenen Frequenz, ist die Signalstrecke frei und es liegt kein anderer Fehler vor. Ist die Signalstrecke unterbrochen oder liegt ein anderer Fehler vor, liegt am Generator ein Gleichsignal an. Die elektrischen Schwingungen oder das elektrische Gleichsignal des Generators kann in einem mit dem Generator verbundenen Signalwandler (Auswertung) in ein binäres Signal umgewandelt werden. Dieses binäre Signal kann dann beispielsweise zum Schalten einer Arbeitsmaschine oder zum Auslösen eines Signals dienen.

Der Begriff Sicherheitsbarriere umfasst sowohl berührungslos wirkende Schutzeinrichtungen, wie z. B. Lichtschranken, als auch taktile Schutzeinrichtungen, wie Sicherungsleisten, die z. B. an automatischen Garagentoren oder Straßenbahntüren angebracht werden und bei Verformung den Torantrieb abschalten. In Sicherungsleisten verläuft die Lichtstrecke durch einen Kanal, der von einem deformierbaren Profil begrenzt ist.

Erfindungsgemäß umfasst der Generator eine Verzögerungsschaltung mit einem Ein- und einem Ausgang, deren Eingang mit dem elektrischen Signal des Empfängers beschaltet ist und an deren Ausgang das zeitverzögerte Signal anliegt, und einem Inverter zur Signalumkehr. Vorzugsweise wird dem Inverter das zeitverzögerte Signal zugeführt. Im Falle rechteckförmiger Schwingungen handelt es sich bei dem Inverter um eine Schaltung zur Signalumkehr, die das invertierte Signal in den Sender zurückkoppelt.

Die Wellenlänge zwischen Lichtsender und Lichtempfänger übertragener Lichtsignale liegt vorzugsweise im Spektrum des unsichtbaren Lichts, insbesondere des Infrarotlichts. Die Lichtsignale können von Leuchtdioden oder Laserdioden (mit einer einzigen definierten Wellenlänge) erzeugt werden.

Um die Fehlersicherheit auch für den Fall zu garantieren, wenn mit der Frequenz des Generators schwingendes Fremdlicht gleicher Wellenlänge auf den Empfänger fällt, kann der Sender zusätzlich gepulstes Licht, insbesondere gepulstes Infrarotlicht, emittieren. Im Empfänger muß dann ein entsprechender Filter eingesetzt werden.

Für Anwendungen in der Sicherheitstechnik hat es sich als vorteilhaft erwiesen, die Signalstrecke für die elektromagnetischen Schwingungen im Bereich des unsichtbaren Lichts in einem elastischen Hohlprofil, beispielsweise aus Gummi, anzuordnen.

Nachfolgend wird die Erfindung anhand von Zeichnungen näher erläutert. Es zeigen:
- Fig. 1: ein Prinzipschaltbild der erfindungsgemäßen Anordnung und
- Fig. 2: den Signalwechsel in der erfindungsgemäßen Schaltung.

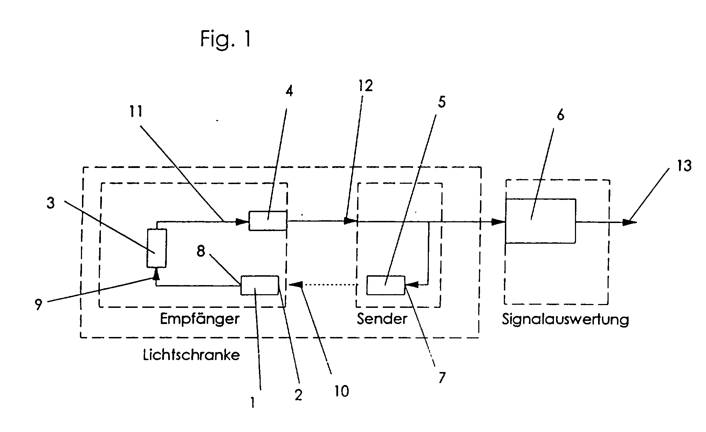

Fig. 1 zeigt eine erfindungsgemäße Sicherheitsbarriere, die im wesentlichen aus einem Lichtempfänger 1 mit einem Empfangssensor 2, einem Zeitverzögerungsglied 3, einem Inverter 4 zur Signalumkehr sowie einen Lichtsender 5 für Infrarotlicht besteht. Zwischen Lichtsender 5 und Lichtempfänger 1 befindet sich die durch Luft verlaufende Lichtstrecke 10. Außerdem weist die Anordnung einen Signalwandler 6 zur Signalauswertung auf.

Der Lichtsender 5 besitzt einen elektrischen Eingang 7, um die Aussendung von Infrarotlicht zu steuern. Der Lichtempfänger 1 besitzt einen elektrischen Ausgang 8, der den Empfang von Infrarotlicht signalisiert. Der Ausgang 8 des Lichtempfängers 1 und der Eingang 7 des Lichtsenders 5 sind über eine drahtgebundene Signalstrecke 9,11,12 gekoppelt.

Liegt am Ausgang 8 des Lichtempfängers 1 Nullpotential an, strahlt der Sender 5 Infrarotlicht aus, das der Empfangssensor 2 des Lichtempfängers 1 detektiert. Ein elektrisches Signal 9 des Empfängers 1 wird dem Zeitverzögerungselement 3 zugeführt und liegt mit zeitlicher Verzögerung als zeitverzögertes Signal 11 an dem Inverter 4 an, der das Signal umkehrt und anschließend als invertiertes Signal 12 in den Sender 5 zurückkoppelt.

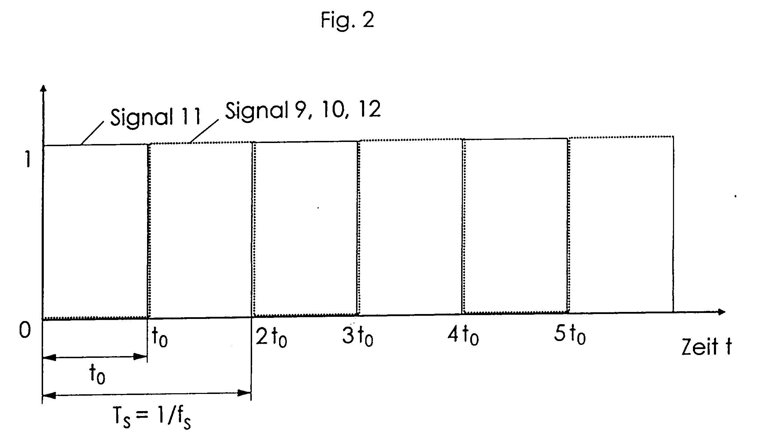

Die Anordnung arbeitet im einzelnen wie folgt:
Ist das invertierte Signal 12 hinter dem Inverter 4 logisch "1", ist auch das Lichtsignal 10 des Infrarotsenders 5 und das elektrische Signal 9 des Lichtempfängers 1 logisch "1". Ist das elektrische Signal 9 des Lichtempfängers 1 logisch "1", wird das zeitverzögerte Signal 11 hinter der Zeitverzögerungsschaltung mit einer Zeitverzögerung t₀ ebenfalls logisch "1". Hinter dem Inverter 4 wird dessen invertiertes Signal 12 logisch "0" mit der Folge, daß auch das Lichtsignal auf logisch "0" geht. Die Anordnung schwingt, wie in Fig. 2 dargestellt, mit der durch die Zeitverzögerung des Zeitverzögerungselementes 3 festgelegten Frequenz fₛ.

Wird die Lichtstrecke zwischen dem Lichtsender 5 und dem Empfangssensor 2 des Lichtempfängers 1 unterbrochen oder fällt Fremdlicht auf den Empfangssensor 2 oder ist einer der Signalwege 9,11,12 unterbrochen, hört der Generator sofort auf zu schwingen und das Wechselsignal geht in ein Gleichsignal über.

Der in dem Ausführungsbeispiel durch das invertierte Signal 12 gespeiste Signalwandler 6 wandelt das invertierte Signal 12 in ein binäres Signal 13 um. Hört der Generator auf zu schwingen, schaltet der Signalwandler 6 um und öffnet beispielsweise einen Relaiskontakt, der die Stromzufuhr eines Gefahren verursachenden Antriebs abschaltet und ggf. den Antrieb auf Rückwärtslauf umschaltet.

## Patentansprüche

1. Sicherheitsbarriere mit einem Lichtsender (5), einem Lichtempfänger (1), einer nicht leitungsgebundenen Lichtsignalstrecke (10) zwischen Lichtsender und Lichtempfänger und einer Auswerteschaltung, die ein elektrisches Signal liefert, sobald die Lichtsignalstrecke (10) unterbrochen wird,
**dadurch gekennzeichnet,**
dass die Lichtsignalstrecke (10) Bestandteil einer Rückkopplungsleitung (9, 11, 12) eines Generators (1, 3, 4, 5) zur Erzeugung elektrischer Schwingungen ist und
dass in der Rückkopplungsleitung (9, 11, 12) eine Verzögerungsschaltung (3) und ein Inverter (4) zur Signalumkehr enthalten sind, wobei der Eingang der Verzögerungsschaltung (3) mit dem elektrischen Signal (9) des Empfängers (1) beschaltet ist und an dem Ausgang der Verzögerungsschaltung (3) das zeitverzögerte Signal (11) anliegt.

2. Sicherheitsbarriere nach Anspruch 1, dadurch gekennzeichnet, dass der Inverter (4), dem das zeitverzögerte Signal (11) zugeführt wir, das invertierte Signal (12) in den Sender (5) zurückkoppelt.

3. Sicherheitsbarriere nach Anspruch 1 oder 2, dadurch gekennzeichnet, dass der Sender gepultes Infrarotlicht emittiert.

4. Sicherheitsbarriere nach einem der Ansprüche 1 - 3, gekennzeichnet durch ein elastischen Hohlprofil als Signalstrecke für die elektromagnetischen Schwingungen im Bereich des unsichtbaren Lichts.

5. Sicherheitsbarriere nach einem der Ansprüche 1 - 4, dadurch gekennzeichnet, dass der Generator (1, 3, 4, 5) elektrische Schwingungen mit rechteckförmigem oder impulsartigem Spannungsverlauf erzeugt.

6. Sicherheitsbarriere nach einem der Ansprüche 1 - 5, gekennzeichnet durch einen Signalwandler (6), der die elektrischen Schwingungen oder ein elektrisches Gleichsignal des Generators (1, 3, 4, 5) in ein binäres Signal umwandelt.

## Claims

1. A safety barrier comprising a light transmitter (5), a light receiver (1), a conductor-free light signal path (10) between the light transmitter and the light receiver, and an evaluation circuit outputting an electric signal upon interruption of the light signal path (10),
**characterized in**
that the light signal path (10) forms part of a feedback line (9,11,12) of a generator (1,3,4,5) for generating electric oscillations, and
that the feedback line (9,11,12) includes a delay circuit (3) and an inverter (4) for signal inversion, the input of the delay circuit (3) being arranged to receive the electric signal (9) of the receiver (1), and the output of the delay circuit (3) being connected to the delayed signal (11).

2. The safety barrier according to claim 1, characterized in that the inverter (4) supplied with the delayed signal (11) feeds the inverted signal (12) back to the transmitter (5).

3. The safety barrier according to claim 1 or 2, characterized in that the transmitter emits pulsed infrared light.

4. The safety barrier according to any one of claims 1 - 3, characterized by an elastic hollow profile as a signal path for the electromagnetic oscillations in the region of the invisible light.

5. The safety barrier according to any one of claims 1 - 4, characterized in that the generator (1,3,4,5) is provided to generate electric oscillations with a rectangular or pulsed voltage waveform.

6. The safety barrier according to any one of claims 1 - 5, characterized by a signal converter (6) provided to convert the electric oscillations or an electric analog signal of the generator (1,3,4,5) into a binary signal.

## Revendications

1. Barrière de sécurité comprenant un émetteur de lumière (5), un récepteur de lumière (1), un tronçon de signal lumineux (10) non câblé entre l'émetteur de lumière et le récepteur de lumière, et un circuit d'évaluation, qui fournit un signal électrique dès que le tronçon de signal lumineux (10) est coupé,
caractérisée en ce que le tronçon de signal lumineux (10) fait partie intégrante d'une ligne de réinjection (9, 11, 12) d'un générateur (1, 3, 4, 5) pour la génération de vibrations électriques et
en ce qu'un circuit de temporisation (3) et un inverseur (4) pour l'inversion du signal sont inclus dans la ligne de réinjection (9, 11, 12), l'entrée du circuit de temporisation (3) étant reliée au signal (9) électrique du récepteur (1) et le signal temporisé (11) étant appliqué à la sortie du circuit de temporisation (3).

2. Barrière de sécurité selon la revendication 1, caractérisée en ce que l'inverseur (4), auquel le signal (11) temporisé est amené, réinjecte le signal inversé (12) dans l'émetteur (5).

3. Barrière de sécurité selon la revendication 1 ou 2, caractérisée en ce que l'émetteur émet une lumière infrarouge pulsée.

4. Barrière de sécurité selon l'une quelconque des revendications 1 à 3, caractérisée par un profil creux élastique comme tronçon de signalisation pour les vibrations électromagnétiques dans le domaine de la lumière invisible.

5. Barrière de sécurité selon l'une quelconque des revendications 1 à 4, caractérisée en ce que le générateur (I, 3, 4, 5) génère des vibrations électriques avec une courbe de tension de forme rectangulaire ou du type impulsionnel.

6. Barrière de sécurité selon l'une quelconque des revendications 1 à 5, caractérisée par un convertisseur de signal (6), qui transforme les vibrations électriques ou un signal continu électrique du générateur (1, 3, 4, 5) en un signal binaire.
